# EUROPEAN PATENT APPLICATION

(11) **EP 4 840 321 A1**
(43) Date of publication of application: **18.11.2026**
(21) Application number: 24845259.1
(22) Date of filing: 18.06.2024
(51) Int. Cl.: A23K 20/174, A23K 50/75, A61K 31/51, A61P 3/02, A61P 21/00, A61P 43/00

(54) **NONWOVEN FABRIC AND AIR-FILTER FILTER MATERIAL**

(30) Priority: 27.07.2023 JP 2023122314
(71) Applicant: Toray Industries, Inc., Tokyo 103-8666 (JP)
(72) Inventor: KANO, Hidekazu, Otsu-shi, Shiga 5208558 (JP); ISHII, Kentaro, Otsu-shi, Shiga 5208558 (JP); NAGAO, Masashi, Mishima-shi, Shizuoka 4118652 (JP)
(74) Representative: Kador & Partner Part mbB
(86) International application number: PCT/JP2024/022056
(87) International publication number: WO 2025/022877

(57) **Abstract**

A nonwoven fabric including at least three types of organic fibers having different fiber diameters, wherein the nonwoven fabric contains ultrafine fibers having a fiber diameter of 0.01 to 0.90 µm and a degree of modification of 1.1 to 5.0. Provided is a nonwoven fabric having both high collection efficiency and low pressure loss, which is suitable for an air-filter medium.

## Description

### TECHNICAL FIELD

The present invention relates to a nonwoven fabric suitable for an air-filter medium, and an air-filter medium.

### BACKGROUND ART

In recent years, there has been an increasing demand for space cleaning, and air filters that remove fine dust in the air are used in a wide range of fields from living environments to industries, such as countermeasures against health problems due to dust having a particle size of 2.5 µm or less, and the maintenance of dust-free environments in the manufacture of semiconductors and pharmaceuticals. In particular, in a space requiring extremely highly clean air, such as a clean room or a semiconductor manufacturing apparatus, a high-performance air filter represented by a high efficiency particulate air filter (HEPA filter) or an ultra low penetration air filter (ULPA filter) is used.

Conventionally, a nonwoven fabric made of glass fibers or a porous membrane made of polytetrafluoroethylene (PTFE) is used as an air-filter medium of a HEPA filter or an ULPA filter. However, both of the air-filter medium formed of the nonwoven fabric made of glass fibers and the porous membrane made of PTFE have been landfilled after use, and there has been a problem that the environmental load is large.

Therefore, with the recent increase in environmental awareness, various nonwoven fabrics made of ultrafine polyester fibers having a smaller environmental load and having excellent filter performance have been proposed.

For example, Patent Document 1 describes an air-filter medium using a nonwoven fabric containing three types of polyester fibers: a nanofiber having a fiber diameter of 200 to 800 nm, a fiber thicker than a nanofiber, and a binder fiber. According to this description, it is possible to provide an air-filter medium having a low pressure loss and high collection performance excellent in pleating property and resistance to wind pressure deformation.

Furthermore, Patent Document 2 describes an air-filter medium using a nonwoven fabric containing three types of polyester fibers: a nanofiber having a fiber diameter of 100 to 1000 nm, a fiber having a fiber diameter of 4 to 12 µm, and a binder fiber. According to this description, it is possible to provide an air-filter medium which is excellent in uniformity of formation, and is a thin membrane, and is excellent in pleating processability, and has a low pressure loss and high collection performance.

### PRIOR ART DOCUMENTS

### PATENT DOCUMENTS

Patent Document 1: Japanese Patent Laid-open Publication No. 2015-140495
Patent Document 2: Japanese Patent Laid-open Publication No. 2022-105839

### SUMMARY OF THE INVENTION

### PROBLEMS TO BE SOLVED BY THE INVENTION

In the method described in Patent Document 1, although a nonwoven fabric excellent in pleating property and resistance to wind pressure deformation can be obtained, the collection efficiency required for the HEPA filter and the ULPA filter is not achieved, and the effect is insufficient from the viewpoint of achieving both low pressure loss and high collection efficiency.

In addition, in the method described in Patent Document **2,** a thin nonwoven fabric excellent in pleating processability can be obtained, and furthermore, the collection efficiency required for the HEPA filter or the ULPA filter can be reached, but the pressure loss is high, and the effect is insufficient from the viewpoint of achieving both the low pressure loss and the high collection efficiency.

An object of the present invention is to solve the above-described problems of the prior art, and to provide a nonwoven fabric suitable for an air-filter medium having both high collection efficiency and low pressure loss, and an air-filter medium using the nonwoven fabric.

### SOLUTIONS TO THE PROBLEMS

As a result of intensive studies on the above problems, the present inventors have found that when a nonwoven fabric including at least three types of organic fibers having different fiber diameters is formed into a nonwoven fabric containing ultrafine fibers having a fiber diameter and a degree of modification within a specific range, the nonwoven fabric can be suitably used for an air-filter medium having both high collection efficiency and low pressure loss, and have completed the present invention.

The above problem can be solved by the present invention, that is, a nonwoven fabric including at least three types of organic fibers having different fiber diameters, wherein the nonwoven fabric contains ultrafine fibers having a fiber diameter of 0.01 to 0.90 µm and a degree of modification of 1.1 to 5.0, microfibers, and binder fibers.

Furthermore, the variation in the degree of modification of the ultrafine fibers is preferably 1.0 to 10.0%.

The nonwoven fabric can be suitably employed as an air-filter medium, and the air-filter medium can be suitably employed for an air filter.

In addition, the air filter can be suitably used for a fan filter unit, a clean room, and a semiconductor manufacturing apparatus.

### EFFECTS OF THE INVENTION

According to the present invention, it is possible to obtain a nonwoven fabric having both high collection efficiency and low pressure loss, which is suitable for an air-filter medium.

### BRIEF DESCRIPTION OF THE DRAWINGS

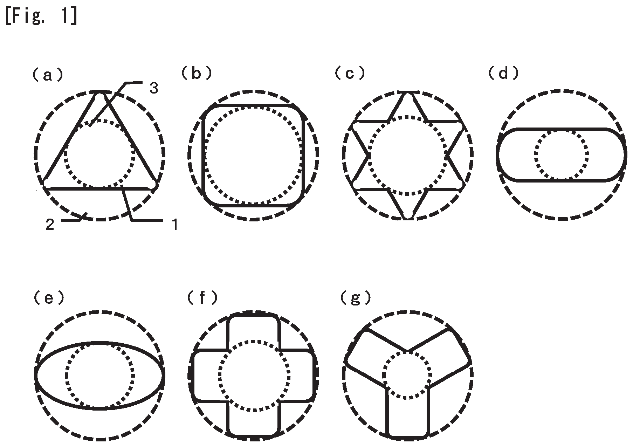

Fig. 1 is a diagram illustrating an example of cross-sectional shape of ultrafine fibers according to the present invention.

### EMBODIMENTS OF THE INVENTION

The nonwoven fabric of the present invention is a nonwoven fabric including at least three types of organic fibers having different fiber diameters, wherein the nonwoven fabric contains ultrafine fibers having a fiber diameter of 0.01 to 0.90 µm and a degree of modification of 1.1 to 5.0, microfibers, and binder fibers.

Hereinafter, the nonwoven fabric of the present invention will be described in detail below. Note that the ultrafine fibers, the microfibers, and the binder fibers used in the nonwoven fabric of the present invention are all short fibers.

The ultrafine fibers used for the nonwoven fabric of the present invention have a fiber diameter of 0.01 to 0.90 µm. The fiber diameter in the present invention refers to a value measured by the method described in the section of Examples. The smaller the fiber diameter, the higher the specific surface area, which is preferable because a high collection performance is exhibited when formed into a nonwoven fabric. However, when the fiber diameter is 0.01 µm or more, handleability and molding processability at the time of processing the nonwoven fabric are improved in addition to the high collection performance, which provides a nonwoven fabric excellent in durability when used. The fiber diameter is more preferably 0.05 µm or more, still more preferably 0.10 µm or more. On the other hand, when the fiber diameter is 0.90 µm or less, excellent collection performance is exhibited when formed into a nonwoven fabric due to the effect of a high specific surface area caused by the small fiber diameter. The fiber diameter is more preferably 0.70 µm or less, and still more preferably 0.50 µm or less.

Since the ultrafine fibers have a fiber diameter smaller than that of normal fibers, the ratio of the fiber diameter to the fiber length (equal to aspect ratio) is large when the ultrafine fibers are formed into short fibers. Since the ultrafine fibers have a large aspect ratio, there has been a problem that the ultrafine fibers are entangled and aggregated in a solution when the solution is stirred in a step of obtaining the ultrafine fibers by dissolving and removing a sea component from the sea-island fibers described later or a step of preparing a fiber dispersion containing the ultrafine fibers and performing papermaking. The nonwoven fabric in which the ultrafine fibers are entangled and aggregated has low uniformity of formation. In an air-filter medium such as a HEPA filter or an ULPA filter, fine dust particles collide with the ultrafine fibers constituting the air-filter medium, and the particles adhere to the surface of the ultrafine fibers, so that high collection performance is exhibited. However, in a nonwoven fabric in which the ultrafine fibers are entangled and aggregated, the surface of the ultrafine fibers effective for the adhesion of the fine dust particles is reduced, which causes the collection performance to be exhibited insufficiently.

As a result of intensive studies on the above problems, the present inventors have found that entanglement and aggregation of ultrafine fibers can be suppressed by making the cross section of ultrafine fibers modified, and have completed the present invention that a nonwoven fabric suitable as an air-filter medium can be obtained. That **is,** when the ultrafine fibers have a perfect circular cross section (It refers to a perfect circle or a circular cross section close thereto. The same applies hereinafter.), the ultrafine fibers can be bent in a free direction by 360° in the solution when the solution is stirred, which entangles and aggregates the ultrafine fibers. On the other hand, in a case where the ultrafine fibers have a modified cross section, when, for example, the cross section is an equilateral triangle, directions in which the ultrafine fibers can be bent can be limited to three directions, which can suppress entanglement and aggregation of the ultrafine fibers as compared with a perfect circular cross section. As a result, the uniformity of the formation of the obtained nonwoven fabric is improved, and the surface of the ultrafine fibers effective for adhesion of fine dust particles increases when the nonwoven fabric is used as an air-filter medium, which exhibits high collection performance.

In addition, when the blending ratio (wt%) of the ultrafine fibers in the nonwoven fabric increases, the nonwoven fabric has a dense structure, which increases the pressure loss when the nonwoven fabric is used as an air-filter medium. However, when the ultrafine fibers have a modified cross section, the surface area of each of the ultrafine fibers can be increased as compared with a perfect circular cross section having the same fiber cross section area. Therefore, when it is assumed that the area of the perfect circular cross section and the area of the transverse cross section of the fibers are the same, and the same collection performance is exhibited when a nonwoven fabric is formed, it is possible to reduce the blending ratio (wt%) of the ultrafine fibers in the nonwoven fabric by forming the modified cross section, which allows the pressure loss to be reduced.

From the above, it is important that the ultrafine fibers according to the present invention have a modified cross section in which the shape of the fiber cross section is not a perfect circular cross section.

The ultrafine fibers according to the present invention are not particularly limited as long as the shape of the fiber cross section is other than a perfect circular cross section, and examples thereof include, but are not limited to, a polygon shape (Figs. 1(a) and 1(b) as an example), a multilobed shape (Fig. 1(c) as an example), a flat shape (Fig. 1(d) as an example), an ellipse shape (Fig. 1(e) as an example), a cross shape (Fig. 1(f) as an example), an X shape, and a Y shape (Fig. 1(g) as an example).

The ultrafine fibers according to the present invention have a degree of modification of 1.1 to 5.0. The degree of modification in the present invention refers to a value measured by the method described in the section of Examples. When the degree of modification is 1.1 or more, it is possible to suppress entanglement and aggregation of the ultrafine fibers in a solution when the solution is stirred in a step of obtaining the ultrafine fibers by dissolving and removing a sea component from the sea-island fibers described later or a step of preparing a fiber dispersion containing the ultrafine fibers and performing papermaking, and excellent collection performance is exhibited when a nonwoven fabric is formed. In addition, since the surface area of each of the ultrafine fibers can be increased as compared with a perfectly circular cross section, when it is assumed that the area of the perfectly circular cross section and the area of the transverse cross section of the fibers are the same, and the same collection performance is exhibited when a nonwoven fabric is formed, it is possible to reduce the blending ratio (wt%) of the ultrafine fibers in the nonwoven fabric, which allows the pressure loss to be reduced. The degree of modification is more preferably 1.2 or more, still more preferably 1.5 or more, and particularly preferably 2.0 or more. On the other hand, when the degree of modification is 5.0 or less, abrasion at the time of processing or use of the nonwoven fabric can be suppressed, and a nonwoven fabric excellent in durability can be obtained. The degree of modification is more preferably 4.5 or less, still more preferably 4.0 or less, and particularly preferably 3.5 or less.

The ultrafine fibers according to the present invention preferably have a variation in the degree of modification of 1.0 to 10.0%. The variation in the degree of modification in the present invention refers to a value measured by the method described in the section of Examples. The variation in the degree of modification is preferably as small as possible from the viewpoint of uniformity of the formation of the obtained nonwoven fabric and uniformity of filter performance when used as an air-filter medium, but the technical lower limit is 1.0% at the present time. On the other hand, when the variation in the degree of modification is 10.0% or less, the uniformity of the formation of the obtained nonwoven fabric is favorable, and the filter performance is stabilized when the nonwoven fabric is used as an air-filter medium, which is preferable. The variation in the degree of modification is more preferably 7.0% or less, and still more preferably 5.0% or less.

The nonwoven fabric of the present invention contains microfibers. By containing the microfibers, it is possible to suppress shedding of the ultrafine fibers thinner than the microfibers at the time of processing a nonwoven fabric by wet papermaking described later, which can exhibit high collection performance by the ultrafine fibers. In addition, the ultrafine fibers are not excessively densified, and an increase in pressure loss can be suppressed.

The microfibers according to the present invention are preferably fibers having a fiber diameter of 1.0 to 30.0 µm. The fiber diameter in the present invention refers to a value measured by the method described in the section of Examples. When the fiber diameter of the microfibers is 1.0 µm or more, the microfibers become structural fibers for maintaining the shape of the nonwoven fabric in the nonwoven fabric, and the ultrafine fibers are not excessively densified, an increase in pressure loss can be suppressed, and a nonwoven fabric having both high collection performance and low pressure loss can be obtained, which is preferable. The fiber diameter of the microfibers is more preferably 2.0 µm or more, and still more preferably 3.0 µm or more. On the other hand, when the fiber diameter of the microfibers is 30.0 µm or less, it is possible to suppress shedding of the ultrafine fibers thinner than the microfibers at the time of processing the nonwoven fabric by wet papermaking described later, and the microfibers serve as a scaffold of the ultrafine fibers in the obtained nonwoven fabric, so that three-dimensionally homogeneous fine spaces can be formed, which is preferable. The fiber diameter of the microfibers is more preferably 28.0 µm or less, and still more preferably 25.0 µm or less.

The nonwoven fabric of the present invention contains binder fibers. By containing the binder fibers, the fibers constituting the nonwoven fabric can be physically bonded to each other by thermal bonding, so that it is possible to prevent the fibers constituting the nonwoven fabric from shedding at the time of processing the nonwoven fabric by wet papermaking described later, it is possible to maintain the three-dimensional structure of the nonwoven fabric, and it is possible to improve the strength of the nonwoven fabric. The binder fibers are not particularly limited, but for example, a core-sheath fiber in which a thermoplastic polymer having a melting point of 150°C or lower is disposed in a sheath can be suitably employed. When such a core-sheath fiber is used, a nonwoven fabric is formed and then subjected to a drying step such as a Yankee dryer or an air-through dryer, or a heat treatment step such as a calender, whereby the sheath component on the surface of the binder fibers is melted and bonded to other fibers constituting the nonwoven fabric, so that the rigidity of the nonwoven fabric can be enhanced, which is preferable. Furthermore, the binder fibers are preferable because its core component can contribute to ensuring the strength of the nonwoven fabric. Note that when the melting point of the core component of the binder fibers is higher than that of the sheath component and the difference in the melting points is 20°C or higher, the sheath component on the surface of the binder fibers is easily sufficiently melted, and the decrease in orientation of the core component is suppressed, so that sufficient thermal adhesion and high rigidity can be achieved, which is preferable.

The binder fibers according to the present invention preferably have a fiber diameter of 5.0 to 50.0 µm. The fiber diameter in the present invention refers to a value measured by the method described in the section of Examples. When the fiber diameter of the binder fibers is 5.0 µm or more, the strength of the nonwoven fabric can be secured by adhesion between the binder fibers and other fibers constituting the nonwoven fabric, which is preferable. The fiber diameter of the binder fibers is more preferably 7.0 µm or more, still more preferably 10.0 µm or more. On the other hand, when the fiber diameter of the binder fibers is 50.0 µm or less, the binder fibers and other fibers constituting the nonwoven fabric can be uniformly and firmly bonded, which is preferable. The fiber diameter of the binder fibers is more preferably 45.0 µm or less, still more preferably 40.0 µm or less.

In the nonwoven fabric of the present invention, the blending ratio (wt%) of each fiber is not particularly limited, and can be appropriately selected according to the fiber diameter of each fiber, the application of the nonwoven fabric, and required characteristics, but the blending ratio of the ultrafine fibers is preferably 5 to 40 wt%. When the blending ratio of the ultrafine fibers is 5 wt% or more, excellent collection performance is exhibited in the form of a nonwoven fabric due to the effect of a high specific surface area derived from the small fiber diameter of the ultrafine fibers, which is preferable. The blending ratio of the ultrafine fibers is more preferably 10 wt% or more, and still more preferably 15 wt% or more. On the other hand, when the blending ratio of the ultrafine fibers is 40 wt% or less, the ultrafine fibers are not excessively densified in the nonwoven fabric, an increase in pressure loss can be suppressed, and a nonwoven fabric having both high collection performance and low pressure loss can be obtained, which is preferable. The blending ratio of the ultrafine fibers is more preferably 35 wt% or less, further preferably 30 wt% or less.

In the nonwoven fabric of the present invention, the blending ratio of the binder fibers is preferably 5 to 50 wt%. When the blending ratio of the binder fibers is 5 wt% or more, adhesiveness between fibers in the nonwoven fabric can be secured, and the strength of the obtained nonwoven fabric is also good, which is preferable. The blending ratio of the binder fibers is more preferably 10 wt% or more, and still more preferably 15 wt% or more. On the other hand, when the blending ratio of the binder fibers is 50 wt% or less, it is possible to suppress the reduction in the size of the fine space in the nonwoven fabric and the clogging of the fine space due to the bonding of the binder fibers, so that the flow of air is not inhibited when air is passed through the nonwoven fabric, and the increase in pressure loss can be suppressed, which is preferable. The blending ratio of the binder fibers is more preferably 45 wt% or less, and still more preferably 40 wt% or less.

In the nonwoven fabric of the present invention, the blending ratio of the microfibers is preferably 10 to 90 wt%. When the blending ratio of the microfibers is 10 wt% or more, shedding of the ultrafine fibers thinner than the microfibers is suppressed at the time of processing the nonwoven fabric by wet papermaking described later, so that the microfibers serve as a scaffold of the ultrafine fibers in the obtained nonwoven fabric, and three-dimensionally homogeneous fine spaces can be formed, which is preferable. The blending ratio of the microfibers is more preferably 15 wt% or more, and still more preferably 20 wt% or more. On the other hand, when the blending ratio of the microfibers is 90 wt% or less, a nonwoven fabric exhibiting both excellent collection performance by the ultrafine fibers and good strength by the binder fibers can be obtained, which is preferable. The blending ratio of the microfibers is more preferably 80 wt% or less, and still more preferably 70 wt% or less.

When three types of organic fibers having different fiber diameters constituting the nonwoven fabric of the present invention are defined as ultrafine fibers, microfibers, and binder fibers, the blending ratio is preferably ultrafine fibers/microfibers/binder fibers = 5 to 40/10 to 90/5 to 50 (wt%). When the blending ratio is within the above range, the microfibers serve as a scaffold of ultrafine fibers to form three-dimensionally homogeneous fine spaces, and high collection performance by the ultrafine fibers is exhibited, and the ultrafine fibers are not excessively densified, and an increase in pressure loss can be suppressed, which is preferable. Furthermore, the binder fibers can thermally bond the fibers constituting the nonwoven fabric to each other, maintain the three-dimensional structure of the nonwoven fabric, and improve the strength of the nonwoven fabric, which is preferable.

Each fiber used in the nonwoven fabric of the present invention is an organic fiber. The organic fiber in the present invention is a fibrous material containing an organic substance as a main component. Specific examples of the organic fiber include, but are not limited to, cellulose produced from wood pulp or the like, natural fibers such as cotton, hemp, wool, and silk, regenerated fibers such as rayon, semi-synthetic fibers such as acetate, and synthetic fibers typified by polyester, nylon, acrylic, and the like. Among them, from the viewpoint of mechanical properties and dimensional stability, synthetic fibers made of a thermoplastic polymer are preferable. Specific examples of the thermoplastic polymer include, but are not limited to, polyester such as polyethylene terephthalate, polytrimethylene terephthalate, polybutylene terephthalate, polyethylene naphthalate, and polylactic acid; polyamide such as polyamide 6, polyamide 66, and polyamide 610; polyolefin such as polyethylene, polypropylene, and polymethylpentene; polycarbonate; polyacrylate; polyphenylene sulfide; thermoplastic polyurethane; and copolymers thereof. Among them, the polyester such as polyethylene terephthalate, polytrimethylene terephthalate, and polybutylene terephthalate; the polyamide such as polyamide 6 and polyamide 66; and the polyphenylene sulfide are preferable because they have both mechanical properties and heat resistance.

The organic fiber in the present invention may be subjected to various modifications by adding secondary additives as long as the effects of the present invention are not impaired. Specific examples of the secondary additives include, but are not limited to, a compatibilizer, a plasticizer, an antioxidant, an ultraviolet absorber, an infrared ray absorbent, a fluorescent brightening agent, a mold releasing agent, an antibacterial agent, a nucleating agent, a thermal stabilizer, a flame retardant, an antistatic agent, a color protection agent, an adjustor, a delustering agent, an antifoaming agent, a preservative, a gelatinizer, latex, a filler, ink, a coloring agent, a dye, a pigment, a perfume, and the like. These secondary additives may be used singly or in combination.

The basis weight of the nonwoven fabric of the present invention is preferably 10 to 200 g/m². The basis weight of the nonwoven fabric in the present invention refers to a value measured by the method described in the section of Examples. When the basis weight is 10 g/m² or more, handleability and molding processability at the time of processing the nonwoven fabric are improved, and a uniform nonwoven fabric having a small difference in density and excellent durability at the time of use can be obtained, which is preferable. The basis weight is more preferably 20 g/m² or more, and still more preferably 30 g/m² or more. On the other hand, when the basis weight is 200 g/m² or less, it is possible to suppress an increase in pressure loss due to densification of the nonwoven fabric, and molding processability such as pleating is good when the nonwoven fabric is used as an air-filter medium, which is preferable. The basis weight is more preferably 150 g/m² or less, and still more preferably 100 g/m² or less.

The nonwoven fabric of the present invention preferably has a thickness of 0.05 to 1.0 mm. The thickness of the nonwoven fabric in the present invention refers to a value measured by the method described in the section of Examples. When the thickness is 0.05 mm or more, handleability and molding processability at the time of processing the nonwoven fabric are good, and a nonwoven fabric excellent in durability at the time of use can be obtained, which is preferable. In addition, when used as an air-filter medium, molding processability such as pleating is good, which is preferable. The thickness is more preferably 0.1 mm or more, and still more preferably 0.2 mm or more. On the other hand, a thickness of 1.0 mm or less is preferable because it is possible to suppress an increase in pressure loss due to densification of the nonwoven fabric. In addition, when an air filter is formed by performing pleating at the time of using the nonwoven fabric as an air-filter medium, a portion where adjacent filter media are in contact with each other is reduced depending on the thickness of the filter media, so that a filtration area can be secured, and an increase in pressure loss can be suppressed, which is preferable. The thickness is more preferably 0.9 mm or less, and still more preferably 0.8 mm or less.

The porosity of the nonwoven fabric of the present invention is preferably 70% or more. The porosity of the nonwoven fabric in the present invention refers to a value measured by the method described in the section of Examples. When the porosity is 70% or more, an increase in pressure loss due to densification of the nonwoven fabric is suppressed, air efficiently flows into the fine space in the nonwoven fabric, filtration performance is enhanced, and a nonwoven fabric having both high collection performance and low pressure loss can be obtained, which is preferable. The porosity is more preferably 80% or more, and still more preferably 90% or more.

Next, an example of a method for producing the nonwoven fabric of the present invention will be described below.

First, fibers other than ultrafine fibers are put into an aqueous medium and stirred with a disintegrator to prepare a fiber dispersion in which the fibers are uniformly dispersed. In this step, it is possible to adjust the dispersibility of the fibers according to the charged amount of the fibers, the amount of the water medium, the stirring time, and the like, and it is preferable that each short fiber is dispersed in the water medium as uniformly as possible. In addition, a dispersant may be added in order to improve the dispersibility of the fibers in the aqueous medium, but when the nonwoven fabric is subjected to post-processing, the amount of the dispersant to be added is preferably kept to the minimum necessary so as not to affect the processability.

Next, a fiber dispersion of ultrafine fibers in which the ultrafine fibers are fiber dispersion uniformly dispersed in an aqueous medium is prepared according to a method described later. The fiber dispersion of ultrafine fibers and the fiber dispersion of fibers other than the ultrafine fibers described above are mixed to obtain a papermaking stock, and the papermaking stock is subjected to wet papermaking to obtain a nonwoven fabric in which the thinnest ultrafine fibers among each fiber constituting the nonwoven fabric are uniformly disposed.

The ultrafine fibers in the present invention can be produced by using a sea-island fibers composed of two or more types of polymers having different dissolution rates in a solvent. The sea-island fibers are fibers having a structure in which an island component composed of a hardly soluble polymer is scattered in a sea component composed of an easily soluble polymer. By dissolving the sea component to form only the island component, ultrafine fibers are obtained.

As a method for making the sea-island fibers, sea-island composite spinning by melt spinning is suitable from the viewpoint of high productivity and continuous production, and a method using a sea-island composite spinneret is preferable from the viewpoint of excellent control of the fiber diameter and cross-sectional shape of the island component.

Specific examples of the hardly soluble polymer used for the island component include, but are not limited to, polyester such as polyethylene terephthalate (PET), polytrimethylene terephthalate, polybutylene terephthalate, polyethylene naphthalate, and polylactic acid; polyamide such as polyamide **6,** polyamide 66, and polyamide 610; polyolefin such as polyethylene, polypropylene, and polymethylpentene; and thermoplastic polymer such as polycarbonate, polyacrylate, polyphenylene sulfide, and thermoplastic polyurethane; and copolymers thereof.

From the viewpoint of simplifying the sea component elution step, the easily soluble polymer used for the sea component preferably exhibits easy solubility in an aqueous solvent, hot water, or the like. As the easily soluble polymer in the present invention, copolymerized polyester, polylactic acid, polyvinyl alcohol, or the like is preferably used, and in particular, polyester copolymerized with polyethylene glycol or sodium 5-sulfoisophthalic acid alone or in combination thereof, or polylactic acid is preferably used from the viewpoint of handleability and easy dissolution in a low concentration aqueous solvent.

The term "easily soluble" means that, with respect to the solvent used for the dissolution treatment, when based on the hardly soluble polymer, the dissolution rate ratio (easily soluble polymer/hardly soluble polymer) is 100 or more. In consideration of simplification and time reduction of the dissolution treatment, the dissolution rate ratio is preferably large, more preferably 1000 or more, and still more preferably 10000 or more. Such a range is preferable because the dissolution treatment is completed in a short time, and ultrafine fibers suitable for the present invention can be obtained without unnecessarily deteriorating the hardly soluble polymer.

In addition, from the viewpoint of the solubility with respect to the aqueous solvent and the simplification of the treatment of the waste liquid generated at the time of dissolution, it is particularly preferable to use polylactic acid, a polyester in which 3 to 20 mol% of sodium 5-sulfoisophthalic acid is copolymerized, and a polyester in which 5 to 15 wt% of polyethylene glycol having a weight-average molecular weight of 500 to 3000 is copolymerized in addition to sodium 5-sulfoisophthalic acid described above.

As described above, examples of a suitable combination of polymers of the sea-island fibers described above include, but are not limited to, a combination in which the sea component is either polyester obtained by copolymerizing 3 to 20 mol% of sodium 5-sulfoisophthalic acid and copolymerizing 5 to 15 wt% of polyethylene glycol having a weight average molecular weight of 500 to 3000, or polylactic acid, and the island component is any of polyethylene terephthalate, polytrimethylene terephthalate, polybutylene terephthalate, polyethylene naphthalate, and copolymers thereof.

The spinning temperature of the sea-island fibers described above is preferably a temperature at which a polymer having a high melting point or a high viscosity mainly exhibits fluidity, among the hardly soluble polymer and the easily soluble polymer determined from the viewpoint described above. The temperature at which the polymer exhibits fluidity varies depending on the characteristics and molecular weight of the polymer, but the melting point of the polymer is used as a guide, and the spinning temperature may be set to the melting point plus 60°C or less. Such a range is preferable because thermal decomposition of the polymer or the like in the spinning head or the spinning pack is suppressed, so that a decrease in molecular weight is suppressed, and the sea-island fibers can be favorably produced.

In the present invention, as described above, since the sea component is dissolved and removed from the sea-island fibers to obtain ultrafine fibers, it is necessary to make the cross section of the island component modified in order to make the ultrafine fibers have a modified cross section. In order to obtain sea-island fibers in which the island component is modified, the sea-island composite spinneret exemplified in Japanese Patent Publication No. 5740877 can be suitably employed, but the invention is not limited thereto.

The yarn melted and discharged from the sea-island composite spinneret is cooled and solidified, converged by applying an oil agent or the like, and taken up by a roller having a specified peripheral speed. The take-up speed can be determined from the discharge amount, the intended fiber diameter, and the like, and is preferably 100 to 7000 m/min from the viewpoint of stably producing the sea-island fibers. The spun sea-island fibers are preferably drawn from the viewpoint of improving mechanical properties and thermal stability, and the spun multifilament may be once wound and then drawn, or may be drawn following spinning without being wound.

It is preferable that the sea-island fibers described above are formed into tows in which tens to millions of filaments are bundled, and cut to a desired fiber length using a cutting machine such as a guillotine cutter, a slice machine, or a cryostat. The fiber length after the cutting process is preferably cut so that the ratio (fiber length/fiber diameter) to the diameter of the island component of the sea-island fibers (corresponding to the fiber diameter of the ultrafine fibers) is 1000 to 6000. Such a range is preferable because the number of contact points between fibers increases when a nonwoven fabric is formed, the formation of a bridge structure between fibers is promoted, and the reinforcing effect of the nonwoven fabric can be enhanced. When the fiber length/fiber diameter is 1000 or more, the ultrafine fibers are suppressed from shedding from the nonwoven fabric during nonwoven fabric processing by wet papermaking, which is preferable. The fiber length/fiber diameter is more preferably 1500 or more, and still more preferably 2000 or more. On the other hand, when the fiber length/fiber diameter is 6000 or less, aggregation of ultrafine fibers in an aqueous medium is suppressed, and a nonwoven fabric having high uniformity can be obtained, which is preferable. The fiber length/fiber diameter is more preferably 5500 or less, and still more preferably 5000 or less.

Ultrafine fibers can be produced by dissolving and removing a sea component from the above-described sea-island fibers. That is, the sea-island fibers after the cutting described above may be immersed in a solvent or the like capable of dissolving the easily soluble polymer of the sea component to remove the easily soluble polymer. When the easily soluble polymer is copolymerized polyethylene terephthalate which has been copolymerized with 5-sodium sulfoisophthalic acid, polyethylene glycol, or the like, or is polylactic acid, it is possible to use an aqueous alkali solution such as a sodium hydroxide solution. In the case of an aqueous alkali solution, the bath ratio of the sea-island fibers to the aqueous alkali solution (weight (g) of the sea-island fibers: weight (g) of the aqueous alkali solution) is preferably 1:5 to 1:10000, and more preferably 1:10 to 1:5000. Such a range is preferable because the ultrafine fibers are suppressed from being unnecessarily entangled when the easily soluble polymer of the sea component is dissolved.

In addition, the alkali concentration of the aqueous alkali solution is preferably 0.1 to 5 wt%, and more preferably 0.5 to 3 wt%. Such a range is preferable because the dissolution of the easily soluble polymer of the sea component is completed in a short time, and a fiber dispersion in which ultrafine fibers are homogeneously dispersed can be obtained without unnecessarily deteriorating the hardly soluble polymer of the island component. In addition, the temperature of the aqueous alkali solution is not particularly limited, but when the temperature is set to 50°C or more, the progress of the dissolution of the easily soluble polymer of the sea component can be accelerated, which is preferable.

In the present invention, the aqueous solution obtained by dissolving the easily soluble polymer of the sea component from sea-island fibers may be used as a fiber dispersion of ultrafine fibers as it is, or may be used by adding an acid or an alkali to adjust the pH, or by diluting with water. In addition, in the fiber dispersion, a dispersant may be added in order to suppress aggregation of the ultrafine fibers over time. Examples of the dispersant include a cationic compound, a nonionic compound, and an anionic compound, and it is particularly preferable to use an anionic compound from the viewpoint of improving dispersibility by electric repulsive force in an aqueous medium. The addition amount of the dispersant is preferably 0.001 to 10 times the weight of the ultrafine fibers, and such a range is preferable because the dispersibility of the ultrafine fibers is secured without impairing the processability at the time of nonwoven fabric processing by wet papermaking.

When the fibers (microfibers, binder fibers, etc.) other than the ultrafine fibers in the present invention are synthetic fibers made of a thermoplastic polymer, they can be produced by performing melt spinning in a well-known method, drawing them as necessary, and then cutting them into desired fiber lengths as described above. Here, the fiber length of the fibers other than the ultrafine fibers is preferably 30 mm or less. When the fiber length is 30 mm or less, formation of fiber lumps associated with strong entanglement of fibers during dispersion in an aqueous medium is suppressed, homogeneous nonwoven fabric can be obtained, and the nonwoven fabric can be suitably used as an air-filter medium, which is preferable.

The fiber dispersion of ultrafine fibers prepared in this manner is mixed with the fiber dispersion of fibers other than ultrafine fibers described above, diluted to a certain concentration to prepare a papermaking stock, and then dehydrated by an inclined wire, a circular net, or the like to form a nonwoven fabric by wet papermaking. Examples of the apparatus used for the wet papermaking include, but are not limited to, a cylinder paper machine, a fourdrinier paper machine, an inclined tanmo paper machine, or a paper machine in combination thereof. In the papermaking process, a three-dimensionally homogeneous nonwoven fabric can be produced by controlling the accumulation of fibers during filtration water by adjusting the papermaking speed and the amount of fibers or water medium in addition to the dispersibility of fibers in the papermaking stock.

The nonwoven fabric formed by wet papermaking is passed through a drying step in order to remove moisture. As the drying method, from the viewpoint that the drying of the nonwoven fabric and the thermal bonding of the thermally adhesive fibers can be simultaneously performed, a method using hot air ventilation (air through) or a method of bringing the nonwoven fabric into contact with a heat rotating roll (heat calender roll or the like) can be suitably employed.

Since the nonwoven fabric of the present invention has both high collection efficiency and low pressure loss, the air-filter medium using the nonwoven fabric of the present invention can be suitably used as an air-filter medium for an air purifier, an air conditioner, a building air conditioner, an industrial clean room, and a passenger compartment of an automobile, a train, and the like. Furthermore, in a space requiring extremely highly clean air, such as a clean room or a semiconductor manufacturing apparatus, it can be suitably used as, for example, an air-filter medium for an air filter of an air conditioner for taking outside air into the clean room, an air filter of an air conditioner for circulating air in the clean room, and an air filter of a fan filter unit installed on a ceiling of the clean room or the semiconductor manufacturing apparatus. A clean room and a semiconductor manufacturing apparatus including an air filter using the air-filter medium of the present invention are useful in various industries.

### EXAMPLES

Next, the present invention will be described in detail with reference to examples. However, the present invention is not limited only to these Examples. Note that each characteristic value in Examples was obtained by the following method.

### A. Dispersion state of fiber dispersion

Using, as a sample, the fiber dispersion of ultrafine fibers prepared in Examples and Comparative Examples, the dispersion state of ultrafine fibers in the dispersion was visually evaluated by 20 evaluators, and the average score of the scores given by 20 evaluators was calculated, and the average score of 3.0 points or more was regarded as pass, with 5 points for "there is no suspended matter or sediment associated with entanglement or aggregation of ultrafine fibers", 4 points for "there is almost no suspended matter or sediment associated with entanglement or aggregation of ultrafine fibers", 3 points for "there are few suspended matters and sediments associated with entanglement and aggregation of ultrafine fibers", 2 points for "there are many suspended matters and sediments associated with entanglement and aggregation of ultrafine fibers", and 1 point for "there are numerous suspended matters and sediments associated with entanglement and aggregation of ultrafine fibers".

### B. Fiber diameter

The sea-island fibers obtained in each of Examples and Comparative Examples were used as a sample, embedded in an epoxy resin, frozen by FC 4E Cryosectioning System manufactured by Reichert, cut by Reichert-Nissei ultracut N (ultramicrotome) equipped with a diamond knife, and then an image of the cut surface was photographed with a transmission electron microscope (H-7100FA manufactured by Hitachi High-Tech Corporation) at a magnification of 5000. The diameters (circumscribed circle diameters) of perfect circles circumscribing 100 island components randomly extracted from the photographed image were measured to two decimal places in units of µm, and the average value was calculated and rounded off to the two decimal places to obtain the diameter of the island component of the sea-island fibers (corresponding to the fiber diameter of the ultrafine fiber used as raw material fibers).

Microfibers or binder fibers used as raw material fibers in Examples and Comparative Examples were used as samples, and images were photographed at a magnification at which 150 to 300 fibers can be observed with a scanning electron microscope (SU-1510 manufactured by Hitachi High-Tech Corporation), and fiber diameters of 100 fibers randomly extracted from the photographed images were measured. The fiber diameter was measured from a two-dimensionally photographed image to one decimal place in units of µm with the fiber width in a direction perpendicular to the fiber axis as a fiber diameter, and the average value was calculated and rounded off to one decimal place to obtain the fiber diameter of the microfibers or the binder fibers.

Using, as a sample, the nonwoven fabric obtained in Examples and Comparative Examples, an image of the surface of the nonwoven fabric was photographed at a magnification at which 300 to 3000 fibers can be observed with a scanning electron microscope (SU-1510 manufactured by Hitachi High-Tech Corporation), and the fiber diameters of 100 fibers randomly extracted from the photographed image were measured. The fiber diameter was measured from a two-dimensionally photographed image to two decimal places in units of µm with the fiber width in a direction perpendicular to the fiber axis as a fiber diameter. The above operation was performed on 10 images photographed in the same manner, and with respect to the fiber diameters of a total of 1000 fibers measured from the 10 images, a graph regarding the fiber diameter distribution was created with the horizontal axis representing the fiber diameter and the vertical axis representing the number. Subsequently, for each of the upwardly convex fiber diameter distributions, in the fiber diameter range of ±10% of the peak value having the largest number of existence in the fiber diameter distribution, the fiber diameter was determined by rounding off the value calculated with the following equation to two decimal places: 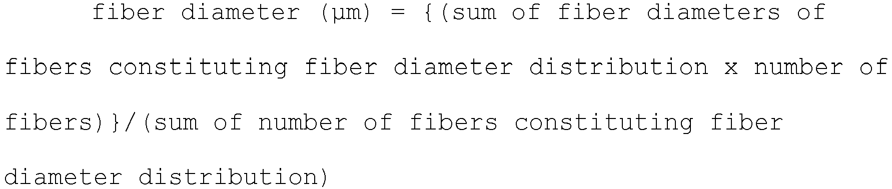 fiber diameter (µm) = {(sum of fiber diameters of fibers constituting fiber diameter distribution x number of fibers)}/(sum of number of fibers constituting fiber diameter distribution)

Here, among the calculated fiber diameters, the smallest value was defined as the fiber diameter of the ultrafine fiber. In addition, the fiber diameter calculated by fibers having adhesion points with other fibers at five or more locations in the photographed image was defined as the fiber diameter of the binder fibers. Note that the above adhesion point is not a point that fibers are simply overlapped with each other, but a point that fibers are joined and integrated with each other. Then, the fiber diameter of fibers other than the above ultrafine fibers and the binder fibers was defined as the fiber diameter of the microfibers.

### C. Degree of Modification

Using the images of the sea-island fibers photographed in the above section **B,** the diameters (circumscribed circle diameters) of the perfect circles circumscribed around 100 randomly extracted island components were measured to two decimal places in units of µm, and the diameters (inscribed circle diameters) of the perfect circles inscribed in these island components were measured to two decimal places in units of µm. Subsequently, the circumscribed circle diameter of each island component was divided by the inscribed circle diameter and rounded off to two decimal places to calculate the degree of modification of each island component, and then the average value of the degrees of irregularities of 100 island components was calculated and rounded off to two decimal places to obtain the degree of modification of the island component of the sea-island fibers (corresponding to the degree of modification of the ultrafine fibers used as raw material fibers). Note that when the number of inscribed circles was not fixed to one as shown in Figs. 1(d) and 1(e), the inscribed circle having the largest diameter was defined as the inscribed circle diameter.

Using, as a sample, the nonwoven fabric obtained in Examples and Comparative Examples, an image of the cross section of the nonwoven fabric was photographed at a magnification at which 30 to 300 fibers can be observed with a scanning electron microscope (SU-1510 manufactured by Hitachi High-Tech Corporation). The circumscribed circle diameters of 10 fibers, which were randomly extracted from the photographed image and in which the diameter (circumscribed circle diameter) of the perfect circle circumscribing the fiber cross section was less than 1.0 µm, were measured to two decimal places in units of µm, and the diameters (inscribed circle diameters) of the perfect circles inscribed in these fibers were measured to two decimal places in units of µm. The above operation was performed on 10 images photographed in the same manner, and the circumscribed circle diameter and the inscribed circle diameter of a total of 100 fibers were measured. Subsequently, the circumscribed circle diameter of each fiber was divided by the inscribed circle diameter and rounded off to two decimal places to calculate the degree of modification of each fiber, and then the average value of the degrees of irregularities of 100 fibers was calculated and rounded off to two decimal places to obtain the degree of modification. Note that when the number of inscribed circles was not fixed to one as shown in Figs. 1(d) and 1(e), the inscribed circle having the largest diameter was defined as the inscribed circle diameter.

### D. Variation in degree of Modification

The standard deviation of the degree of modification and the average value of the degree of modification were calculated using the degree of modification of each of the 100 island components or the 100 fibers calculated in the above item **C,** and then a value calculated by the following equation: 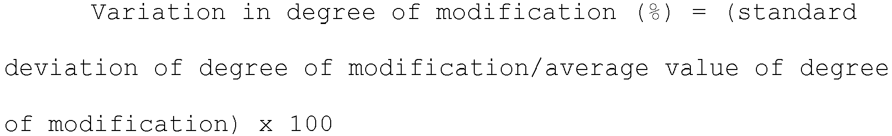 Variation in degree of modification (%) = (standard deviation of degree of modification/average value of degree of modification) x 100 was rounded off to one decimal place to determine the variation in the degree of modification of the island component of the sea-island fibers (corresponding to the variation in the degree of modification of the ultrafine fibers used as raw material fibers) and the variation in the degree of modification of the ultrafine fibers in the nonwoven fabric (%).

### E. Basis weight

Using, as a sample, the nonwoven fabric obtained in Examples and Comparative Examples, the weight of the nonwoven fabric cut into 250 mm x 250 mm square was weighed, and the weight converted to the weight per unit area (1 m²) was rounded off to one decimal place to calculate the basis weight (g/m²) of the nonwoven fabric. The measurement was performed at random three points per sample, and the average value was rounded off to one decimal place to obtain the basis weight.

### F. Thickness

Using, as a sample, the nonwoven fabric used for the measurement of Item E above, a thickness of the nonwoven fabric was measured using a dial thickness gauge (SM-114 manufactured by TECLOCK Co., Ltd., diameter of measuring element: 10 mmφ, graduation: 0.01 mm, measuring force: 2.5 N or less). The measurement was performed at random five points per sample, and the average value was rounded off to two decimal places to obtain the thickness (mm) of the nonwoven fabric.

### G. Porosity

Using the basis weight and the thickness of the nonwoven fabric calculated in the above items E and F, the value calculated by the following equation was rounded off to one decimal place to obtain the porosity (%) of the nonwoven fabric. 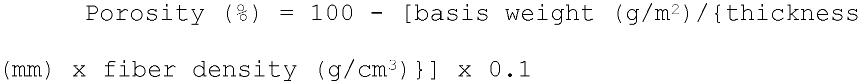 Porosity (%) = 100 - [basis weight (g/m2)/{thickness (mm) x fiber density (g/cm3)}] x 0.1

Note that the fiber density may be obtained by applying the density of fibers constituting the nonwoven fabric, and was calculated as 1.38 g/cm³ in the case of PET.

### H. Collection efficiency

Using, as a sample, the nonwoven fabric obtained in Examples and Comparative Examples, the nonwoven fabric cut into a circle having a diameter of 200 mm was set in a holder having an effective opening area of 0.1 m², air containing 10000 to 25000 polystyrene latex particles/m³ having a particle size of 0.15 to 0.50 µm was allowed to pass through the holder in the vertical direction at a surface wind speed of 3.3 m/min, the number of atmospheric dust particles having a particle size of 0.3 to 0.5 µm on the upstream side and the downstream side of the filter was measured using a particle counter (KC-01D manufactured by RION Co., Ltd.), and the collection efficiency was calculated by the following equation. 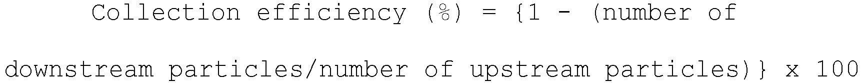 Collection efficiency (%) = {1 - (number of downstream particles/number of upstream particles)} x 100

The measurement was performed at random three points per sample, and the average value was rounded off to two decimal places to obtain the collection efficiency (%).

### I. Pressure loss

Using, as a sample, the nonwoven fabric obtained in Examples and Comparative Examples, the nonwoven fabric cut into a circle having a diameter of 200 mm was set in a holder having an effective opening area of 0.1 m², air was allowed to pass in the vertical direction at a surface wind speed of 3.3 m/min, and a pressure difference between the upstream side and the downstream side of the filter was measured by a differential pressure gauge. The measurement was performed at random three points per sample, and the average value was rounded to the nearest whole number to obtain the pressure loss (Pa).

### J. Quality factor

Using the collection efficiency and the pressure loss of the nonwoven fabric calculated in the above items H and I, a value calculated by the following equation: 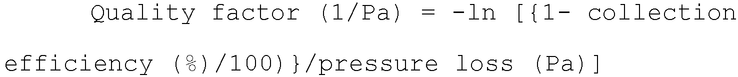 Quality factor (1/Pa) = -ln [{1- collection efficiency (%)/100)}/pressure loss (Pa)] was rounded off to three decimal places to obtain the quality factor (1/Pa) of the nonwoven fabric.

### K. Quality

Using, as a sample, the nonwoven fabric obtained in Examples and Comparative Examples, 10 images photographed in the above item B were evaluated by 20 evaluators, and the average score of the scores assigned by 20 evaluators was calculated, and the average score of 3.0 points or more was regarded as pass, with 5 points for "there is no site where the ultrafine fibers are aggregated or where the ultrafine fibers are scraped", 4 points for "there are almost no sites where the ultrafine fibers are aggregated or where the ultrafine fibers are scraped", 3 points for "there are a few sites where the ultrafine fibers are aggregated or where the ultrafine fibers are scraped", 2 points for "there are many sites where ultrafine fibers are aggregated or where ultrafine fibers are scraped", and 1 point for "there are numerous sites where ultrafine fibers are aggregated or where ultrafine fibers are scraped".

### Example 1

Polyethylene terephthalate (PET) was used as an island component, and copolymerized PET obtained by copolymerizing 8.0 mol% of sodium 5-sulfoisophthalic acid and 10 wt% of polyethylene glycol having a molecular weight of 1000 was used as a sea component, and each of them was vacuum-dried at 150°C for 12 hours. Subsequently, the island component and the sea component were supplied at a blending ratio of 50 wt% and 50 wt%, respectively, to an extruder type composite spinning machine to be separately melted, and they were allowed to flow into a spinning pack incorporating a sea-island composite spinneret (number of island components: 2000, cross-sectional shape of island component: triangular, Fig. 1(a)) at a spinning temperature of 285°C, and a composite polymer stream was discharged from a discharge hole at a discharge rate of 12 g/min to obtain a spun yarn. The spun yarn was cooled with cooling air at an wind temperature of 20°C and a wind speed of 20 m/min, and an oil agent was applied to the yarn by an oiling device to converge the yarn, and the yarn was taken up by a first godet roller rotating at 1,000 m/min, and wound by a winder through a second godet roller rotating at the same speed as the first godet roller to obtain an undrawn yarn. Thereafter, the obtained undrawn yarn was drawn 3.4 times between rollers heated to 85°C and 130°C using a drawing machine to obtain sea-island fibers (diameter of island component: 0.60 µm, cross-sectional area of island component: 0.115 µm², degree of modification of island component: 1.89). Note that the diameter of a perfect circle circumscribing the island component (circumscribed circle diameter) was defined as the diameter of the island component.

The obtained sea-island fibers were cut so as to have a fiber length of 0.6 mm. The sea-island fibers after the cutting process were treated in a 1 wt% aqueous solution of sodium hydroxide at a bath ratio of 1:100 at 90°C for 30 minutes, and then neutralized with acetic acid to pH = 7 to obtain a fiber dispersion of ultrafine fibers.

Next, the blending ratio of PET short fibers (fiber diameter: 3.0 µm, fiber length: 3.0 mm) as microfibers was adjusted to 55 wt% (the blending ratio in the papermaking stock), and the blending ratio of core-sheath PET short fibers (core component: PET, sheath component: copolymerized polyester having a melting point of 110°C copolymerized in a ratio of 60 mol% of terephthalic acid and 40 mol% of isophthalic acid as dicarboxylic acid components, and 85 mol% of ethylene glycol and 15 mol% of diethylene glycol as diol components, core-sheath ratio (weight ratio) = 50:50, fiber diameter: 10.0 µm, fiber length: 5.0 mm) as binder fibers were adjusted to 30 wt% (the blending ratio in the papermaking stock), and the fibers were uniformly mixed and dispersed with water by a disintegrator to prepare a fiber dispersion of microfibers and binder fibers.

The fiber dispersion of ultrafine fibers described above was homogeneously mixed with the fiber dispersion of microfibers and binder fibers so that the blending ratio of the ultrafine fibers was 15 wt% (the blending ratio in the papermaking stock) to prepare a papermaking stock. This papermaking stock was subjected to wet papermaking using a square sheet machine (250 mm square) manufactured by KUMAGAI RIKI KOGYO Co., Ltd., and then subjected to drying and heat treatment with a rotary dryer in which the roller temperature was set to 110°C, thereby obtaining a nonwoven fabric.

The evaluation results of the fiber dispersion of ultrafine fibers and the obtained nonwoven fabric are shown in Table 1. The nonwoven fabric obtained had a basis weight of 50.1 g/m² and a thickness of 0.32 mm. Since the cross-sectional shape of the ultrafine fibers was triangular, entanglement and aggregation of the ultrafine fibers were suppressed in the fiber dispersion and the nonwoven fabric, and both high collection efficiency and low pressure loss were provided, and in the air-filter medium, the quality factor representing the balance between collection efficiency and pressure loss also showed a good value.

### Examples 2, 3, Comparative Example 1

A nonwoven fabric was produced in the same manner as in Example 1 except that the fiber diameter of the ultrafine fibers was changed as shown in Table 1.

The evaluation results of the fiber dispersion of ultrafine fibers and the obtained nonwoven fabric are shown in Table 1. In Examples 2 and 3, the collection efficiency and the pressure loss tended to increase as the fiber diameter of the ultrafine fibers decreased, but the quality factor showed good values. In Comparative Example 1, the pressure loss of the ultrafine fibers showed a low value. However, since the fiber diameter of the ultrafine fibers was large, the collection performance by the ultrafine fibers was not exhibited, the collection efficiency was low, and the quality factor showed an extremely low value.

### Example 4

A nonwoven fabric was produced in the same manner as in Example 1 except that the cross-sectional shape of the island component was changed to a Y-shape (Fig. 1(g)).

The evaluation results of the fiber dispersion of ultrafine fibers and the obtained nonwoven fabric are shown in Table 2. Even when the cross-sectional shape of the ultrafine fibers was a Y-shape, entanglement and aggregation of the ultrafine fibers were suppressed in the fiber dispersion and the nonwoven fabric, and both high collection efficiency and low pressure loss were provided, and good quality factors were shown.

### Examples 5, 6, Comparative Examples 2, 3

A nonwoven fabric was produced in the same manner as in Example 4 except that the degree of modification of the ultrafine fibers was changed as shown in Table 2.

The evaluation results of the fiber dispersion of ultrafine fibers and the obtained nonwoven fabric are shown in Table 2. In Examples 5 and 6, both the high collection efficiency and the low pressure loss were provided, and the quality factor showed a good value. In Comparative Example 2, since the degree of modification of the ultrafine fibers was small, entanglement and aggregation of the ultrafine fibers were observed in the fiber dispersion and the nonwoven fabric, and the pressure loss showed a low value, but the collection performance by the ultrafine fibers was not exhibited, the collection efficiency was low, and the quality factor also showed a low value. In Comparative Example 3, since the degree of modification of the ultrafine fibers was large, the dispersion state of the ultrafine fibers in the fiber dispersion was good, but the ultrafine fibers were scraped in some places in the nonwoven fabric, and the quality was poor. In addition, although the collection efficiency showed a high value, the pressure loss was slightly high, and the quality factor showed a slightly low value.

### Example 7

A nonwoven fabric was produced in the same manner as in Example 1 except that the cross-sectional shape of the island component was changed to an ellipse shape (Fig. 1(e)).

The evaluation results of the fiber dispersion of ultrafine fibers and the obtained nonwoven fabric are shown in Table 3. Even when the cross-sectional shape of the ultrafine fibers was an ellipse shape, entanglement and aggregation of the ultrafine fibers were suppressed in the fiber dispersion and the nonwoven fabric, and both high collection efficiency and low pressure loss were provided, and good quality factors were shown.

### Comparative Example 4

A nonwoven fabric was produced in the same manner as in Example 1 except that the cross-sectional shape of the island component was changed to a circular shape.

The evaluation results of the fiber dispersion of ultrafine fibers and the obtained nonwoven fabric are shown in Table 3. Since the cross-sectional shape of the ultrafine fibers was circular, entanglement and aggregation of the ultrafine fiber were observed in the fiber dispersion and the nonwoven fabric, and the pressure loss showed a low value, but the collection performance by the ultrafine fibers was not exhibited, the collection efficiency was low, and the quality factor also showed a low value.

### Comparative Example 5

A nonwoven fabric was produced in the same manner as in Comparative Example 4 except that the fiber diameter of the ultrafine fibers was changed as shown in Table 3.

The evaluation results of the fiber dispersion of ultrafine fibers and the obtained nonwoven fabric are shown in Table 3. Since the cross-sectional shape of the ultrafine fibers was circular, entanglement and aggregation of the ultrafine fibers were observed in the fiber dispersion and the nonwoven fabric. Since the fiber diameter of the ultrafine fibers was small, the collection efficiency showed a high value, but the pressure loss was slightly high, and the quality factor showed a slightly low value.

### Comparative Examples 6 to 8

A nonwoven fabric was produced in the same manner as in Example 1 except that the ultrafine fibers were not used in Comparative Example 6, the microfibers were not used in Comparative Example 7, the binder fibers were not used in Comparative Example 8, and the blending ratios of the three types of fibers were changed as shown in Table 3.

The evaluation results of the fiber dispersion of ultrafine fibers and the obtained nonwoven fabric are shown in Table 3. In Comparative Example 6, the pressure loss showed a low value. However, since the ultrafine fibers having a small fiber diameter and playing a role of collecting dust by the effect of a high specific surface area were not used, the collection performance was not exhibited, the collection efficiency was extremely low, and the quality factor showed a low value. In Comparative Example 7, the pressure loss showed a low value. However, in the nonwoven fabric, since microfibers playing a role of a scaffold of the ultrafine fibers were not used, most of the ultrafine fibers came off during nonwoven fabric processing by wet papermaking, and as a result, the collection performance by the ultrafine fibers was not sufficiently exhibited, the collection efficiency was low, and the quality factor showed a low value. In Comparative Example 8, since the binder fibers playing a role of bonding fibers constituting a nonwoven fabric were not used, a part of ultrafine fibers came off during nonwoven fabric processing by wet papermaking. As a result, the collection performance of the fiber A was not sufficiently exhibited, the collection efficiency was slightly low, and the quality factor also showed a slightly low value.

**[Table 1]**

| | | | Unit | Example 1 | Example 2 | Example 3 | Comparative Example 1 |
|---|---|---|---|---|---|---|---|
| Raw material fibers | Ultrafine fibers (A) | Polymer | - | PET | PET | PET | PET |
| | | Cross-sectional shape | - | Triangle | Triangle | Triangle | Triangle |
| | | Fiber diameter | µm | 0.60 | 0.30 | 0.20 | 0.95 |
| | | Fiber length | mm | 0.6 | 0.6 | 0.6 | 0.6 |
| | | Cross-sectional area | µm² | 0.115 | 0.029 | 0.013 | 0.289 |
| | | Degree of modification | - | 1.89 | 1.89 | 1.89 | 1.89 |
| | Microfibers (B) | Polymer | - | PET | PET | PET | PET |
| | | Fiber diameter | µm | 3.0 | 3.0 | 3.0 | 3.0 |
| | | Fiber length | mm | 3.0 | 3.0 | 3.0 | 3.0 |
| | Binder fibers (C) | Polymer | - | PET/Copolymerized PET | PET/Copolymerized PET | PET/Copolymerized PET | PET/Copolymerized PET |
| | | Fiber diameter | µm | 10.0 | 10.0 | 10.0 | 10.0 |
| | | Fiber length | mm | 5.0 | 5.0 | 5.0 | 5.0 |
| | Blending ratio | A/B/C | wt% | 15/55/30 | 15/55/30 | 15/55/30 | 15/55/30 |
| Fiber dispersion | Ultrafine fibers | Dispersed state | - | 3.8 | 3.4 | 3.2 | 4.4 |
| Nonwoven fabric | Ultrafine fibers | Fiber diameter | µm | 0.58 | 0.29 | 0.19 | 0.94 |
| | | Degree of modification | - | 1.82 | 1.83 | 1.85 | 1.86 |
| | | Variation in degree of modification | % | 3.2 | 3.5 | 3.9 | 3.0 |
| | Microfibers | Fiber diameter | µm | 3.05 | 2.97 | 3.03 | 3.01 |
| | Binder fibers | Fiber diameter | µm | 10.95 | 11.03 | 10.87 | 10.98 |
| | Basis weight | | g/m² | 50.1 | 50.2 | 49.8 | 50.3 |
| | Thickness | | mm | 0.32 | 0.31 | 0.30 | 0.35 |
| | Porosity | | % | 88.7 | 88.3 | 88.0 | 89.6 |
| | Collection efficiency | | % | 99.91 | 99.98 | 99.99 | 62.31 |
| | Pressure loss | | Pa | 233 | 265 | 311 | 197 |
| | Quality factor | | 1/Pa | 0.030 | 0.032 | 0.030 | 0.005 |
| | Quality | | - | 3.9 | 3.4 | 3.1 | 4.4 |

| | | | | | | | |
|---|---|---|---|---|---|---|---|
| ***PET:** polyethylene terephthalate | | | | | | | |

**[Table 2]**

| | | | Unit | Example 4 | Example 5 | Example 6 | Comparative Example 2 | Comparative Example 3 |
|---|---|---|---|---|---|---|---|---|
| Raw material fibers | Ultrafine fibers (A) | Polymer | - | PET | PET | PET | PET | PET |
| | | Cross-sectional shape | - | Y shape | Y shape | Y shape | Y shape | Y shape |
| | | Fiber diameter | µm | 0.60 | 0.60 | 0.60 | 0.60 | 0.60 |
| | | Fiber length | mm | 0.6 | 0.6 | 0.6 | 0.6 | 0.6 |
| | | Cross-sectional area | µm² | 0.147 | 0.211 | 0.113 | 0.275 | 0.089 |
| | | Degree of modification | - | 2.78 | 1.28 | 4.20 | 1.06 | 5.10 |
| | Microfibers (B) | Polymer | - | PET | PET | PET | PET | PET |
| | | Fiber diameter | µm | 3.0 | 3.0 | | 3.0 | 3.0 |
| | | Fiber length | mm | 3.0 | 3.0 | 3.0 3.0 | 3.0 | 3.0 |
| | Binder fibers (C) | Polymer | - | PET/Copolymerized PET | PET/Copolymerized PET | PET/Copolymerized PET | PET/Copolymerized PET | PET/Copolymerized PET |
| | | Fiber diameter | µm | 10.0 | 10.0 | 10.0 | 10.0 | 10.0 |
| | | Fiber length | mm | 5.0 | 5.0 | 5.0 | 5.0 | 5.0 |
| | Blending ratio | A/B/C | wt% | 15/55/30 | 15/55/30 | 15/55/30 | 15/55/30 | 15/55/30 |
| Fiber dispersion | Ultrafine fibers | Dispersed state | - | 4.2 | 3.5 | 4.5 | 2.8 | 4.7 |
| Nonwoven fabric | Ultrafine fibers | Fiber diameter | µm | 0.59 | 0.62 | 0.63 | 0.58 | 0.60 |
| | | Degree of modification | - | 2.75 | 1.24 | 4.13 | 1.05 | 5.08 |
| | | Variation in degree of modification | % | 4.5 | 2.9 | 6.8 | 2.4 | 11.6 |
| | Microfibers | Fiber diameter | µm | 3.02 | 2.98 | 3.06 | 2.99 | 3.04 |
| | Binder fibers | Fiber diameter | µm | 10.83 | 10.89 | 11.08 | 10.76 | 11.05 |
| | Basis weight | | g/m² | 50.3 | 50.0 | 49.7 | 50.1 | 50.3 |
| | Thickness | | mm | 0.32 | 0.30 | 0.34 | 0.27 | 0.35 |
| | Porosity | | % | 88.6 | 87.9 | 89.4 | 86.6 | 89.6 |
| | Collection efficiency | | % | 99.92 | 99.23 | 99.97 | 97.42 | 99.98 |
| | Pressure loss | | Pa | 216 | 164 | 208 | 163 | 314 |
| | Quality factor | | 1/Pa | 0.033 | 0.030 | 0.039 | 0.022 | 0.027 |
| | Quality | | - | 4.1 | 3.5 | 4.4 | 2.7 | 2.8 |

| | | | | | | | | |
|---|---|---|---|---|---|---|---|---|
| *PET: polyethylene terephthalate | | | | | | | | |

**[Table 3-1]**

| | | | Unit | Example 7 | Comparative Example 4 | Comparative Example 5 |
|---|---|---|---|---|---|---|
| Raw material fibers | Ultrafine fibers (A) | Polymer | - | PET | PET | PET |
| | | Cross-sectional shape | - | Elliptical | Circular | Circular |
| | | Fiber diameter | µm | 0.60 | 0.60 | 0.20 |
| | | Fiber length | mm | 0.6 | 0.6 | 0.6 |
| | | Cross-sectional area | 2 µm | 0.145 | 0.283 | 0.031 |
| | | Degree of modification | - | 1. 93 | 1. 00 | 1. 00 |
| | Microfibers (B) | Polymer | - | PET | PET | PET |
| | | Fiber diameter | µm | 3.0 | 3.0 | 3.0 |
| | | Fiber length | mm | 3.0 | 3.0 | 3.0 |
| | Binder fibers (C) | Polymer | - | PET/Copolymerized PET | PET/Copolymerized PET | PET/Copolymerized PET |
| | | Fiber diameter | µm | 10.0 | 10.0 | 10.0 |
| | | Fiber length | mm | 5.0 | 5.0 | 5.0 |
| | Blending ratio | A/B/C | wt% | 15/55/30 | 15/55/30 | 15/55/30 |
| Fiber dispersion | Ultrafine fibers | Dispersed state | - | 3.3 | 2.6 | 2.2 |
| Nonwoven fabric | Ultrafine fibers | Fiber diameter | µm | 0.61 | 0.59 | 0.19 |
| | | Degree of modification | - | 1. 94 | 1. 03 | 1. 03 |
| | | Variation in degree of modification | % | 2.8 | 2.1 | 2.3 |
| | Microfibers | Fiber diameter | µm | 2.94 | 2.97 | 2.97 |
| | Binder fibers | Fiber diameter | µm | 11.14 | 10.92 | 10.92 |
| | Basis weight | | g/m² | 50.4 | 50.2 | 50.2 |
| | Thickness | | mm | 0.30 | 0.27 | 0.25 |
| | Porosity | | % | 87.8 | 86.5 | 85.4 |
| | Collection efficiency | | % | 99.58 | 94.37 | 99.99 |
| | Pressure loss | | Pa | 180 | 165 | 370 |
| | Quality factor | | 1/Pa | 0.030 | 0.017 | 0.025 |
| | Quality | | - | 3.4 | 2.6 | 2.3 |

| | | | | | | |
|---|---|---|---|---|---|---|
| *PET: polyethylene terephthalate | | | | | | |

**[Table 3-2]**

| | | | Unit | Comparative Example 6 | Comparative Example 7 | Comparative Example 8 |
|---|---|---|---|---|---|---|
| Raw material fibers | Ultrafine fibers (A) | Polymer | - | - | PET | PET |
| | | Cross-sectional shape | - | - | Triangle | Triangle |
| | | Fiber diameter | µm | - | 0.60 | 0.60 |
| | | Fiber length | mm | - | 0.6 | 0.6 |
| | | Cross-sectional area | 2 µm | - | 0.115 | 0.115 |
| | | Degree of modification | - | - | 1.89 | 1.89 |
| | Microfibers (B) | Polymer | - | PET | - | PET |
| | | Fiber diameter | µm | 3.0 | - | 3.0 |
| | | Fiber length | mm | 3.0 | - | 3.0 |
| | Binder fibers (C) | Polymer | - | PET/Copolymerized PET | PET/Copolymerized PET | - |
| | | Fiber diameter | µm | 10.0 | 10.0 | - |
| | | Fiber length | mm | 5.0 | 5.0 | - |
| | Blending ratio | A/B/C | wt% | 0/70/30 | 70/0/30 | 15/85/0 |
| Fiber dispersion | Ultrafine fibers | Dispersed state | - | - | 3.8 | 3.8 |
| Nonwoven fabric | Ultrafine fibers | Fiber diameter | µm | - | 0.57 | 0.61 |
| | | Degree of modification | - | - | 1.84 | 1.87 |
| | | Variation in degree of modification | % | - | 3.1 | 3.2 |
| | Microfibers | Fiber diameter | µm | 3.05 | - | 2.95 |
| | Binder fibers | Fiber diameter | µm | 11.01 | 10.79 | - |
| | Basis weight | | g/m² | 49.8 | 49.9 | 50.0 |
| | Thickness | | mm | 0.41 | 0.22 | 0.16 |
| | Porosity | | % | 91.2 | 83.6 | 77.4 |
| | Collection efficiency | | % | 48.38 | 67.71 | 99.55 |
| | Pressure loss | | Pa | 51 | 64 | 208 |
| | Quality factor | | 1/Pa | 0.013 | 0.018 | 0.026 |
| | Quality | | - | - | 1.6 | 2.8 |

| | | | | | | |
|---|---|---|---|---|---|---|
| *PET: polyethylene terephthalate | | | | | | |

### DESCRIPTION OF REFERENCE SIGNS

- 1:: Outer peripheral shape of ultrafine fibers
- 2:: Circumscribed circle
- 3:: Inscribed circle

## Claims

1. A nonwoven fabric comprising at least three types of organic fibers having different fiber diameters, wherein the nonwoven fabric contains ultrafine fibers having a fiber diameter of 0.01 to 0.90 µm and a degree of modification of 1.1 to 5.0, microfibers, and binder fibers.

2. The nonwoven fabric according to claim 1, wherein the variation in the degree of modification of the ultrafine fibers is 1.0 to 10.0%.

3. An air-filter medium comprising the nonwoven fabric according to claim 1 or 2.

4. An air filter comprising the air-filter medium according to claim 3.

5. A fan filter unit comprising the air filter according to claim 4.

6. A clean room or a semiconductor manufacturing apparatus comprising the air filter according to claim 4.
